# FASCICULE DE BREVET EUROPEEN

(11) **EP 3 380 736 B1**
(45) Date de publication et mention de la délivrance du brevet: **30.07.2025**
(21) Numéro de dépôt: 16809937.2
(22) Date de dépôt: 26.10.2016
(51) Int. Cl.: F16B 11/00, C09J 5/00

(54) **ASSEMBLAGE COLLE ET PROCÉDÉ DE COLLAGE**
VERBUNDENE ANORDNUNG UND VERBINDUNGSVERFAHREN
BONDED ASSEMBLY AND BONDING METHOD

(30) Priorité: 26.11.2015 FR 1561395
(43) Date de publication de la demande: 03.10.2018
(73) Titulaire: Cold Pad, 75014 Paris (FR)
(72) Inventeur: COURT, Jean-Philippe, 75014 Paris (FR)
(74) Mandataire: Plasseraud IP
(86) Numéro de dépôt international: PCT/FR2016/052787
(87) Numéro de publication internationale: WO 2017/089668

(56) Documents cités:
- EP-A2- 2 457 718
- DE-A1- 102009 002 839
- US-A- 3 330 714
- US-A- 4 842 912
- US-A1- 2010 320 346

## Description

La présente invention concerne les techniques de réalisation d'assemblages collés et plus particulièrement dans des environnements dits agressifs pour de tels assemblages.

Elle trouve des applications dans des domaines très variés parmi lesquels on peut citer la connexion d'un élément à un substrat, notamment à un substrat sur lequel aucun élément d'accrochage n'a été initialement prévu, ou encore le renforcement de structures ayant besoin d'être rendues plus résistantes afin de réparer ou prévenir l'apparition de défauts structurels.

L'assemblage d'un élément métallique sur un substrat métallique est souvent effectué par soudage. Cette technique requiert une forte augmentation de température, qui se propage du fait de la conductibilité thermique du substrat métallique. Elle est parfois proscrite en raison d'incompatibilités environnementales, par exemple si un milieu inflammable se trouve à proximité de la zone d'assemblage (ex. sur un bateau de transport de gaz). Sa mise en œuvre peut en outre être problématique si la structure comportant le substrat présente des peintures ou revêtements qui se dégradent à haute température, puisque le soudage de l'élément entraîne alors la nécessité de refaire la peinture ou revêtement, ce qui peut être long et coûteux.

Pour ces raisons, les techniques de soudage posent de sérieux problèmes à bord de plates-formes off-shore ou de navires ou conduites de transport d'hydrocarbures ou autres substances inflammables. Elles y sont couramment employées, mais ont pour inconvénient de requérir une interruption plus ou moins longue de l'exploitation ainsi que des mesures parfois contraignantes pour assurer le niveau de sécurité requis. Les techniques de soudage sont également très difficiles à mettre en œuvre sous l'eau ou en zone de marnage.

Par ailleurs, un soudage est impossible sur certains matériaux comme le verre. Le plus souvent, sur une surface vitrée des ouvertures sont prévues lors de la fabrication des surfaces vitrées afin d'y accrocher des pièces mécaniques, mais, dans le cas du verre trempé et du fait des techniques de fabrication, il est impossible de rajouter une ouverture (pour une accroche) après la fabrication. En outre, ces ouvertures accentuent localement les contraintes à leur voisinage (typiquement, d'un facteur 3 environ) et fragilisent ainsi les surfaces vitrées.

Une autre solution est de coller l'élément sur le substrat au moyen d'un adhésif thermodurcissable ou thermoplastique. Une difficulté est alors de garantir l'obtention des propriétés souhaitées de l'adhésif. En général, les fournisseurs caractérisent les propriétés des adhésifs lorsqu'ils sont mis en œuvre dans des conditions bien contrôlées, notamment en termes de température, de degré d'hygrométrie, etc. Or ces conditions ne sont pas nécessairement réunies dans la pratique, particulièrement en cas d'intervention en milieu marin. En outre, il est extrêmement difficile de garantir la tenue dans le temps de l'adhésif si l'environnement est relativement agressif, ce qui est également défavorable aux interventions en milieu marin.

Le renforcement d'une structure est parfois réalisé en appliquant un renfort en matériau métallique ou composite sur la structure. Néanmoins, il se pose des problématiques analogues à celles précédemment évoquées dans le cas du collage d'un élément sur un substrat. Dans le cas d'un renfort de type métallique, ce dernier est lié à la structure au moyen d'un adhésif, tel qu'une résine. Le matériau composite comporte habituellement une résine qui joue notamment un rôle d'adhésif, et il est difficile d'en garantir le bon comportement si elle est appliquée dans des conditions mal contrôlées. Le matériau composite peut se dégrader au fil du temps si l'environnement du renfort est agressif. Il en est de même pour l'adhésif dans le cadre d'un renfort métallique. Le renforcement conféré à la structure n'est alors pas pérenne.

Des exemples et modes de réalisation de l'art antérieur peuvent être trouvés dans les documents US 4 842 912 A, EP 2 457 718 A2 et US 3 330 714 A.

La présente invention vise à écarter certaines des limitations des techniques précitées et notamment vise à fournir un assemblage collé qui est fiable et pérenne y compris si le milieu est potentiellement agressif.

L'invention vise un procédé de collage d'un connecteur sur un substrat selon la revendication 1.

Le fait de réaliser une dépression dans le dispositif d'installation permet son maintien en place lors des opérations de déplacement du connecteur et assure ainsi son correct positionnement.

Par ailleurs, la dépression peut permettre d'aider ou même d'initier le déplacement du connecteur à l'aide d'une différence de force.

Enfin, la dépression permet de réduire le taux absolu/relatif d'humidité dans l'espace hermétique.

Selon l'invention, la diminution de pression amène une pression au sein dudit espace hermétique en dessous d'une pression de vapeur saturante de l'eau.

La diminution de pression au sein de l'espace hermétique en dessous d'une pression de vapeur saturante de l'eau permet de réduire fortement le taux d'humidité, et de vaporiser l'eau liquide présente sur les parois internes de l'espace hermétique.

Ainsi avant le déplacement du connecteur vers le substrat, les conditions d'humidité peuvent être contrôlées et il est possible de s'assurer que les conditions du collage soient optimales.

En outre, le procédé peut comprendre :
- augmentation de la pression au sein dudit espace hermétique ;
- après ladite augmentation, retrait du dispositif d'installation du substrat.

Ainsi, le dispositif d'installation peut simplement être retiré sans procédure lourde.

Par exemple, un déplacement d'au moins une surface du dispositif d'installation sous l'effet d'une différence de pression peut participer au déplacement du connecteur.

Le déplacement de la surface du dispositif d'installation peut être une déformation d'une paroi ou une translation d'une paroi par exemple.

Ainsi, par la simple diminution de pression mentionnée ci-avant, il est possible d'exercer une force contribuant au déplacement du connecteur. Dès lors, aucun autre dispositif complexe (ex. pistons ou autres) n'est nécessaire afin de déplacer, en temps voulu, le connecteur vers le substrat.

En complément ou en variante, une différence de temps entre la diminution de la pression et le déplacement du connecteur peut être supérieure à 20s.

Ainsi, le connecteur n'est pas mis en mouvement dès le début de la diminution de pression et il est possible d'attendre que les conditions relatives à l'humidité ou à la présence d'eau liquide soient adéquates.

Il a été constaté que cette valeur de 20 secondes procure de très bonnes conditions.

Selon l'invention, la diminution de la pression induit une pression absolue au sein dudit espace hermétique en dessous de 900mbar.

Ainsi, cette pression permet de maintenir le dispositif d'installation en place, contre le substrat. Par ailleurs, la création d'une dépression peut permettre de vérifier que l'étanchéité est faite au niveau du contact entre le substrat et le dispositif d'installation : un joint d'étanchéité positionné au niveau de ce contact peut aider à réaliser ce vide. Bien entendu, une autre pression proche du vide (ex. 150 mbar ou 50 mbar) peut également servir de seuil.

Avantageusement, le déplacement du connecteur peut être effectué si au moins une condition relative à un taux d'humidité dans le volume hermétique est remplie.

Ainsi, si le taux d'humidité du volume hermétique est trop important, il est possible d'attendre jusqu'à que ce taux d'humidité soit acceptable. Bien entendu, cette attente peut posséder une valeur maximale (ex. « si le taux d'humidité n'est pas satisfaisant, l'attente est de 5 min au maximum »).

Dans un mode de réalisation particulier, le procédé peut comporter en outre un freinage du connecteur lors du déplacement vers le substrat.

Ce freinage permet d'éviter un déplacement trop rapide du connecteur vers le substrat, déplacement qui provoquerait alors un choc et éventuellement une détérioration du substrat ou une dégradation de l'homogénéité de l'adhésif.

Le procédé peut comporter en outre une injection de l'adhésif après la diminution de pression.

Ainsi, il n'est pas nécessaire de prédisposer l'adhésif sur le connecteur. Ainsi, lors des opérations dans des conditions extrêmes (ex. installation sous-marine), il est possible d'éviter d'exposer l'adhésif à l'environnement agressif.

Par exemple, le procédé peut comporter un déplacement du connecteur vers le substrat avant l'injection.

Ainsi, il est possible de rapprocher le connecteur du substrat à quelques centimètres ou quelques millimètres (en fonction de la rhéologie de l'adhésif) et ainsi permettre un étalement contrôlé de l'adhésif entre le substrat et le connecteur.

Dans un mode de réalisation, le procédé peut comporter en outre :
- vidange d'un liquide contenu dans ledit espace hermétique;
- rinçage dudit espace hermétique ;
- déshydratation dudit espace hermétique.

Cette mise en œuvre est avantageuse en milieu sous-marin. Le rinçage permet la suppression de la salinité par exemple. Ce rinçage peut être effectué avec un solvant particulier ou de l'eau distillée.

En outre, le procédé peut comporter :
- maintien du connecteur en compression sur le substrat pendant un durcissement de l'adhésif.

Cette mise en compression de l'adhésif a un effet bénéfique sur la tenue du connecteur.

Dans un mode de réalisation, le procédé comporte en outre :
- après un durcissement de l'adhésif, application d'une force de test au connecteur.

Ce test permet de vérifier que le collage est suffisamment efficace et correspond aux prescriptions.

Le procédé peut comporter en outre :
- conservation dudit connecteur à une température inférieur à 0°C, l'adhésif étant appliqué audit connecteur lors de la conservation,
- réchauffement dudit adhésif avant un durcissement dudit adhésif.

Le réchauffement peut se faire à l'aide d'un système de chauffe pendant la mise en œuvre du procédé. Ainsi, il est possible d'appliquer l'adhésif en amont du collage et d'éviter que celui-ci soit appliqué sur site, lors du collage : la qualité de l'application de l'adhésif peut ainsi être mieux contrôlée.

Bien entendu, le procédé de collage peut être partiellement ou totalement automatique.

D'autres caractéristiques et avantages de l'invention apparaîtront encore à la lecture de la description qui va suivre. Celle-ci est purement illustrative et doit être lue en regard des dessins annexés sur lesquels :
- les figures 1a à 1c illustrent des modes de réalisation possibles concernant le procédé de collage de l'assemblage final ;
- les figures 2a à 2e illustrent des vues schématiques de mode de réalisation d'un assemblage collé non-revendiqué.

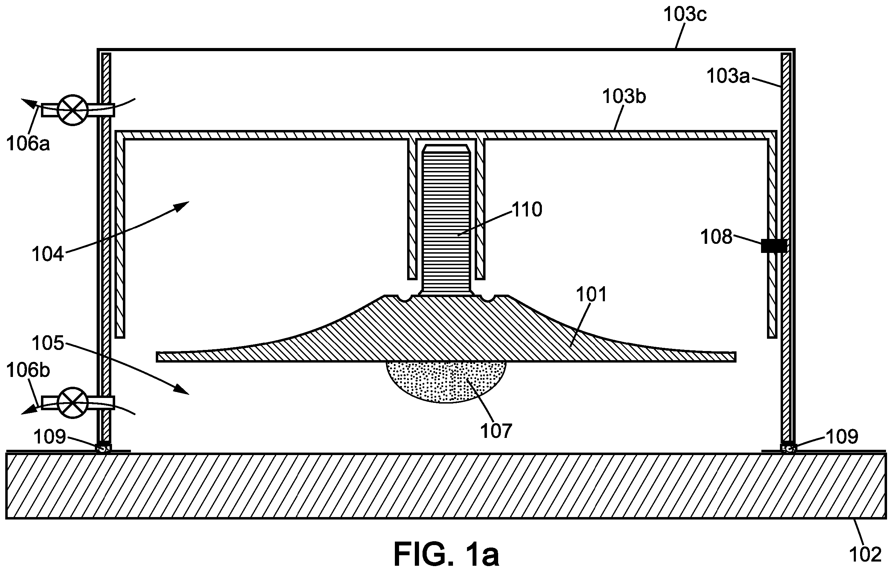

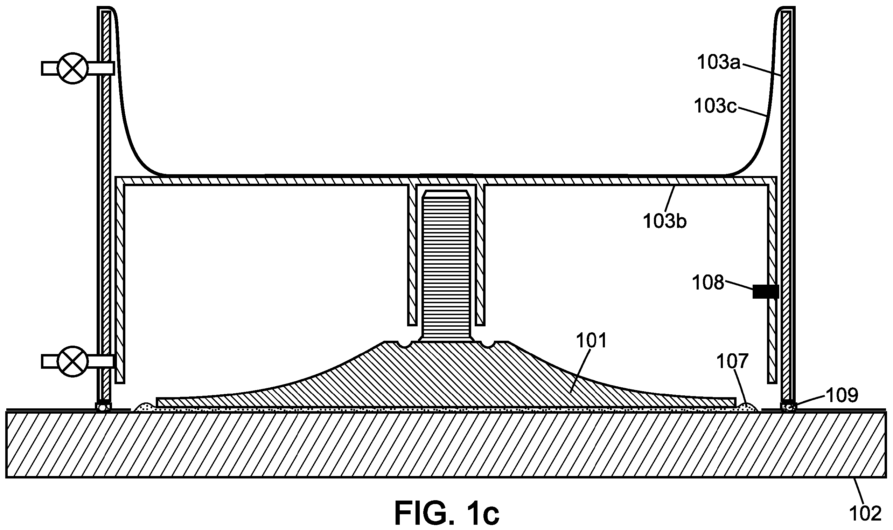

La figure 1a illustre un mode de réalisation possible concernant le procédé de collage de l'assemblage final.

Dans ce mode de réalisation, un dispositif d'installation 103a à 103c est installé au contact du substrat 102.

Le dispositif d'installation comprend une paroi 103a. À une extrémité de cette paroi peut se trouver un joint 109 (par exemple, torique) qui a pour objet de former une interface de contact étanche avec le substrat 102, lorsque le dispositif d'installation est appuyé sur le substrat 102.

Le dispositif d'installation de la figure 1a comprend également une paroi 103c, fixé sur la paroi 103a. Avantageusement, cette paroi 103c est déformable / souple, et étanche. Il est également possible que cette paroi soit déplaçable par translation ou soit fixe. Ainsi, le dispositif d'installation définit, une fois que celui-ci est installé sur le substrat, un espace hermétique 104.

Dans cet espace hermétique 104, il est possible de positionner (préalablement à l'installation du dispositif d'installation contre le substrat) une pièce mobile 103b destinée à recevoir le connecteur 101 à coller sur le substrat 102. Par exemple, la pièce mobile 103b peut être mobile selon une direction parallèle aux parois de l'élément 103a (i.e. dans la direction verticale selon la réalisation présentée en figure 1a) afin de pouvoir déplacer le connecteur 101 au contact du substrat 102. Le connecteur 101 peut être fixé de manière temporaire à la pièce mobile 103b, par exemple par vissage sur la vis 110 (fixé ou faisant part du connecteur 101). Avantageusement, il est possible de faire tourner la pièce mobile 103b autour d'un axe parallèle à la vis 110 lorsque la pièce mobile 103b est installée dans le dispositif d'installation 103a, 103b (ainsi, il est possible de désolidariser facilement la pièce mobile 103b du connecteur 101 après collage) : par exemple, il est donc possible de prévoir que la paroi 103a ait une forme cylindrique et que la pièce mobile 103b possède une forme complémentaire à cette forme cylindrique (au moins partiellement) pour permettre sa rotation.

La connexion du connecteur dans le dispositif d'installation peut également être une liaison mécanique dite « faible », c'est-à-dire que cette liaison cède à une force de quelques Newtons. Cette liaison « faible » permet d'assurer le maintien du connecteur dans le dispositif d'installation. Cette liaison faible peut être par exemple une liaison aimantée ou un clip en forme de U frottant sur la tige filetée 110.

Un élément de blocage en translation, par exemple un loquet 108, lorsqu'il est engagé, peut limiter la mobilité de la pièce mobile 103b selon notamment la direction parallèle aux parois de l'élément 103a.

Avantageusement, la pièce mobile 103b peut être en contact la paroi 103a de telle sorte que ce contact soit étanche (ex. par l'utilisation d'un joint souple par exemple) : si une dépression est créée dans le dispositif d'installation, entre le substrat 102 et la pièce mobile 103b (dans l'espace 104), cette dépression ne se propage pas dans le dispositif d'installation, entre la pièce souple 103c et la pièce mobile 103b (dans ce mode de réalisation, la paroi 103c peut ne pas être déplaçable ou déformable, par exemple, ou simplement peut ne pas être présente).

Le dispositif d'installation peut également comprendre une ou plusieurs vannes aptes à permettre une diminution de pression au sein du dispositif d'installation lorsqu'il est positionné sur le substrat 102. Par exemple, dans la figure 1a, une première vanne permet une aspiration de fluide (ex. de l'air, flèche 106a) dans la zone haute du dispositif d'installation. Cette première vanne est avantageuse, notamment dans l'hypothèse où aucun contact physique n'existe entre la paroi 103a et la pièce mobile 103b ou si ce contact n'est pas étanche. En effet, l'aspiration du fluide permet alors de diminuer la pression dans tout l'espace hermétique du dispositif d'installation.

Une deuxième vanne peut permettre également une aspiration de fluide (ex. de l'air, flèche 106b) dans la zone basse dispositif d'installation (i.e. entre la pièce mobile 103b et le substrat 102). Cette deuxième vanne est avantageuse notamment dans l'hypothèse où un contact physique étanche existe entre la paroi 103a et la pièce mobile 103b. En effet, l'aspiration du fluide permet alors de diminuer la pression dans l'espace du dispositif d'installation compris entre la pièce mobile 103 et le substrat sans la diminuer dans l'espace compris entre la pièce mobile 103b et la paroi souple 103c.

L'aspiration du fluide par la première et/ou la deuxième vanne permet de diminuer la pression au sein de l'espace hermétique 104 proche du vide (ex. inférieure à 50mbar) ou, tout du moins, en dessous d'une pression de vapeur saturante de l'eau pour les conditions de température courante (i.e. dans l'espace hermétique).

Le fait de diminuer la pression en dessous de la pression de vapeur saturante de l'eau permet une « évaporation » de l'humidité présente dans l'air ou sur les surfaces, notamment les surfaces qui seront en contact avec l'adhésif durci (voir ci-dessous). Cette dépression peut être maintenue plusieurs minutes ou quelques secondes (ex. 20s) afin de s'assurer que toute l'humidité a disparu au sein du dispositif d'installation. Les paramètres atmosphériques (telles que l'humidité) peuvent également être contrôlés afin de déterminer dynamiquement le temps de maintien de la dépression : dès que les paramètres atmosphériques atteignent des valeurs prédéterminées, la suite du procédé d'installation peut être mise en œuvre.

Ainsi, même si le dispositif d'installation a été mis en place dans des conditions extrêmes (ex. sous l'eau, sous la pluie ou dans une zone de forte humidité absolue), il est possible d'améliorer simplement les conditions de collages pour une meilleure tenue mécanique et une meilleure durabilité de l'assemblage collé.

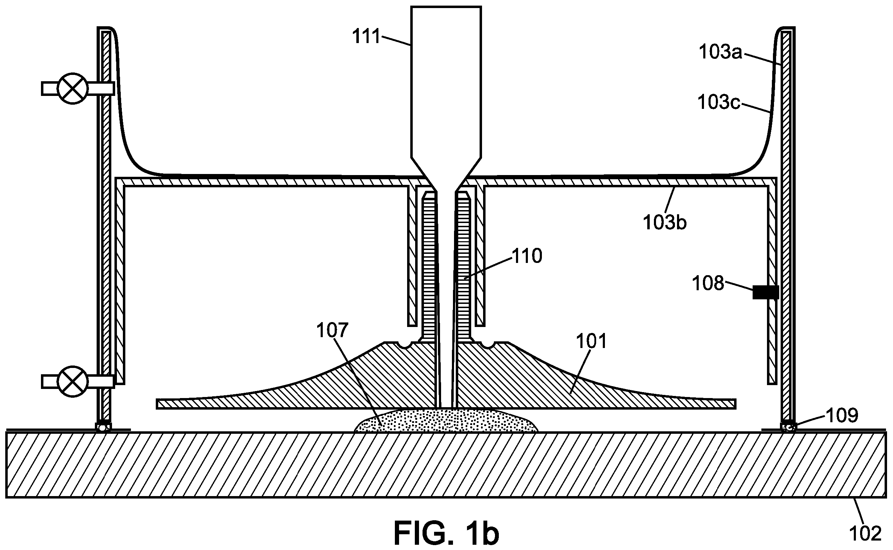

Un adhésif 107 peut être présent sur la surface du 'connecteur 101 situé en vis-à-vis du substrat. Cet adhésif peut avoir été placé, sous la forme d'une noix d'adhésif par exemple, préalablement à la mise en contact du dispositif d'installation sur le substrat. Néanmoins, une telle technique peut limiter la taille de la zone de collage : en effet, si la noix d'adhésif est trop importante (i.e. dans le but d'obtenir une surface de collage importante), il peut être difficile de réaliser une noix sans surface localement convexe sur la surface de la noix d'adhésif. Si la noix d'adhésif comporte une surface localement convexe, une bulle d'air peut se former lors de l'écrasement de l'adhésif 107 entre le connecteur 101 et le substrat 102 (voir ci-dessous). Afin de pallier ce problème, il est possible de positionner le connecteur 101 à proximité du substrat 102 (distance à déterminer à l'aide d'expérimentation en fonction notamment de la rhéologie de l'adhésif non durci) comme le montre la figure 1b, et de venir injecter l'adhésif non durci entre le connecteur 101 et le substrat 102 (par exemple au travers d'une vis creuse 110 et d'un dispositif d'injection 111 venant s'insérer dans ladite vis creuse) : cette solution permet d'obtenir une grande surface de collage tout en limitant l'apparition de bulle dans l'adhésif. Dans le mode de réalisation de la figure 1b, il est possible qu'un déplacement de la pièce mobile 103b soit utile pour amener le connecteur 101 à proximité du substrat.

L'adhésif peut également être placé sous la forme d'un ou plusieurs cordons, de noix multiples ou d'un film adhésif sur au moins une partie des surfaces à encoller.

Une fois que l'adhésif est en place (par une des méthodes exposées préalablement, par exemple), il est possible déplacer le connecteur 101 vers le substrat 102 en débloquant, par exemple, le loquet 108.

Ce déplacement peut être induit par la différence de pression existant entre l'intérieur du dispositif d'installation et l'extérieur du dispositif d'installation : si la paroi 103c est souple ou déplaçable, elle peut se déformer / déplacer contre la pièce mobile 103b et la pousser en direction du substrat.

Ce déplacement peut être également induit par la différence entre la pression existante dans le volume situé entre la pièce mobile 103b et la paroi 103c et la pression existant dans le volume situé entre la pièce mobile 103b et le substrat (cas où ces deux volumes sont étanches l'un par rapport à l'autre) : la différence de pression de chaque côté de la pièce mobile 103b la fera alors se déplacer.

Bien entendu, afin d'éviter tout mouvement brutal lors du déblocage du loquet 108 (pouvant provoquer un choc sur le substrat), il est possible de prévoir un freinage / une retenue partielle de la pièce 103b pour permettre un déplacement en douceur.

Ce déplacement peut permettre de presser le connecteur 101 contre le substrat 102, de comprimer l'adhésif 107 entre le connecteur 101 et le substrat 102 et ainsi de faire migrer l'adhésif 107 dans une direction centrifuge (par rapport à un centre du connecteur) : la surface de l'adhésif localisée entre le connecteur 101 et le substrat 102 peut alors être élargie.

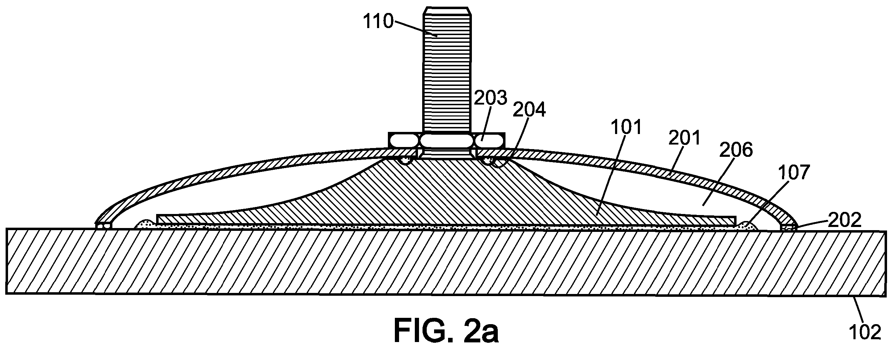

La figure 2a représente une coupe d'un assemblage collé.

Dans ce mode de réalisation, un premier élément 101 du connecteur a été collé sur le substrat 102 à l'aide du procédé de collage décrit précédemment, mais il convient de noter que tout autre procédé de collage aurait pu être utilisé.

Cet assemblage collé comprend le substrat 102 et le connecteur 101 disposé avec un intervalle par rapport au substrat. Par ailleurs, un deuxième élément 201 du connecteur sous la forme d'une cloche est solidarisée avec le premier élément 101 : l'écrou 203 vient se visser sur la tige filetée ou vis 110 afin de venir bloquer le deuxième élément 201 contre le premier élément 101.

Afin d'assurer une bonne étanchéité au niveau du contact du premier élément 101 et du deuxième élément 201, un joint torique 204 peut être installé.

Le deuxième élément 201 s'étend jusqu'au substrat afin de réaliser un contact étanche entre le deuxième élément 201 et le substrat 102. Ce contact étanche est favorisé par l'ajout d'un joint 202 (par exemple, torique) qui est comprimé entre le substrat et le deuxième élément. Ainsi un volume étanche 206 est alors défini par le joint 202, le deuxième élément 201 et le substrat 102 : ce volume étanche 206 en retrait est une gorge de trop-plein et permet à l'excès d'adhésif d'être stocké dans cet espace.

Le contact entre le deuxième élément 201 et le substrat 102 (éventuellement via le joint 202) est appelé zone d'appui. Cette zone d'appui entoure la surface de collage du premier élément 101 en contact avec l'adhésif 107.

Le deuxième élément 201 peut être flexible pour accentuer la force de compression du joint 202.

Le premier élément 101 est installé entre le deuxième 201 et le substrat (i.e. dans le volume étanche). L'adhésif 107 durci occupe au moins partiellement l'intervalle entre le premier élément 101 et le substrat 102, retenant ainsi le premier élément sur le substrat.

Une fois assemblés, le deuxième élément 201 et le joint 202 permettent une protection de l'adhésif contre les agressions de l'environnement extérieur tout en permettant une inspection simplifiée (ex. visuelle) de l'adhésif 107 en désolidarisant le deuxième élément 201 du premier élément 101.

Par ailleurs, la tige filetée ou vis 110 fournit une interface solidarisée à l'assemblage collé et permettant de fixer tout élément mécanique ou structurel extérieur.

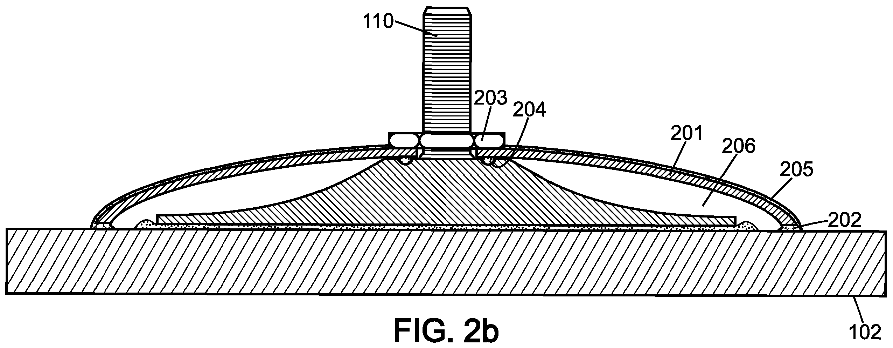

La figure 2b représente une coupe d'un assemblage collé.

Dans ce mode de réalisation, le deuxième élément 201 peut être enrobé d'un revêtement souple 205 (ex. élastomère adhérisé) afin d'atténuer l'effet d'impacts sur ce deuxième élément.

Par ailleurs, ce revêtement souple 205 pourra aussi faire office de joint périphérique 202 comprimé s'il est prolongé entre le deuxième 201 et le substrat 102.

L'enrobage peut être total ou partiel concernant le deuxième élément 201.

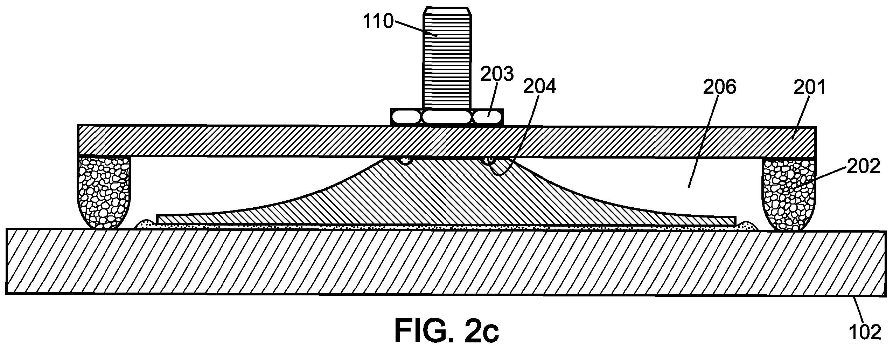

Le deuxième élément 201 peut être une plaque (comme cela est représenté en Figure 2c), ou un dôme ou toute autre forme. La forme en dôme permet une répartition optimum des contraintes tandis une plaque permet une fabrication aisée et des coûts réduits.

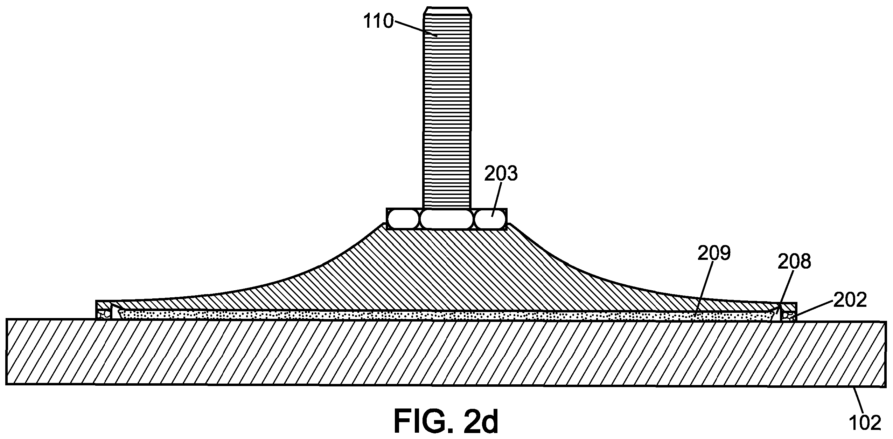

La figure 2d représente une coupe d'un assemblage collé.

Dans ce mode de réalisation, la présence d'un deuxième élément n'est pas nécessaire (sans pour autant que cela l'exclu).

Dans ce mode de réalisation, le connecteur 101 est collé sur le substrat 102 à l'aide du procédé de collage décrit précédemment, mais il convient de noter que tout autre procédé de collage aurait pu être utilisé.

Cet assemblage collé comprend le substrat 102 et le connecteur 101 disposé avec un intervalle par rapport au substrat.

Au moins un joint 202 est comprimé entre le substrat 102 et la partie périphérique du connecteur 101 (appelé alors zone d'appui). Un volume étanche 209 est alors défini par le substrat 102, le connecteur 101 et le joint 202.

À l'intérieur de ce volume et à la périphérie de la surface de collage du connecteur, une gorge de trop-plein 208 peut être formée. Cette gorge de trop-plein 208 est destinée à recueillir le surplus d'adhésif, l'adhésif étant généralement introduit par excès. Cette gorge de trop-plein peut par exemple être un creux formé dans la matière du connecteur.

La gorge de trop-plein 208 peut également servir comme gorge de fixation du joint 202. Le profil de la gorge de trop plein peut être de type queue de poisson ou demi-queue de poisson en fonction de l'usage souhaitée.

L'adhésif durci 107 ne peut alors qu'occuper partiellement le volume étanche 209.

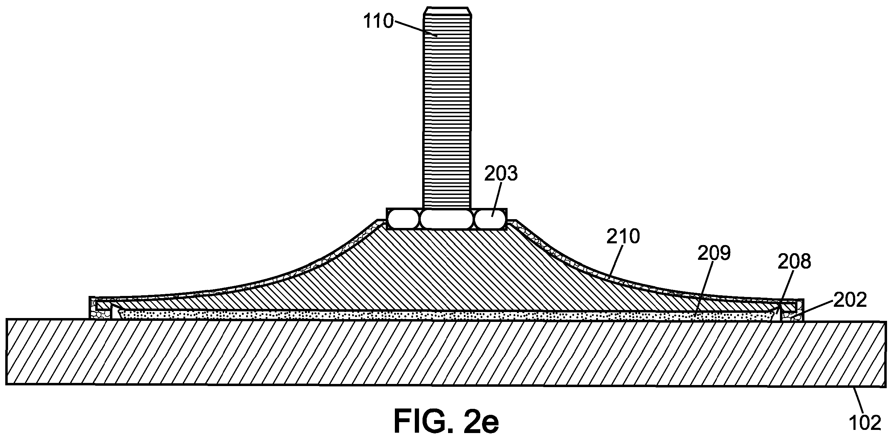

La figure 2e représente une coupe d'un assemblage collé.

Dans ce mode de réalisation, le connecteur 101 peut être enrobé d'un revêtement souple 210 (ex. élastomère adhérisé) afin d'atténuer l'effet d'impacts sur connecteur.

Par ailleurs, ce revêtement souple 210 pourra aussi faire office de joint périphérique 202 comprimé s'il est prolongé entre le connecteur 101 et le substrat 102.

L'enrobage par le revêtement souple 210 ne couvre avantageusement pas la surface de collage amené à être en contact avec l'adhésif 107 (ou au moins en partie).

Les modes de réalisation précédents ne sont pas exclusifs l'un de l'autre : ils peuvent être combinés.

Par ailleurs, dans les modes de réalisation précédents, le connecteur 101 peut être de forme circulaire ou autre forme géométrique. La surface de collage du connecteur 101 est généralement plan (i.e. sur sa surface en contact avec l'adhésif), mais peut aussi être de forme courbe, convexe ou concave, ou toutes autres formes en fonction du substrat à épouser (ex : appareil sous pression, coque de navire à surfaces courbes, tuyauterie, etc.). Par ailleurs, la surface de l'élément principal en contact avec l'adhésif peut intentionnellement ne pas être parfaitement complémentaire à la surface du substrat : afin de permettre une meilleure performance mécanique, il est possible d'introduire des surépaisseurs d'adhésif là ou contraintes ont tendance à se concentrer. Par exemple, un léger creux au milieu de la surface de collage en contact avec l'adhésif peut être introduit afin de générer une épaisseur plus importante d'adhésif dans la zone centrale, réduisant ainsi les concentrations de contrainte observées initialement à cet endroit par l'excès de souplesse qu'il apporte. De la même manière, une forme de profil évasé vers le haut sur les bords aura tendance à augmenter l'épaisseur d'adhésif en périphérie, ce qui aura pour effet d'atténuer les effets de bords.

L'assemblage collé (et notamment la taille de la surface collée) peut être dimensionné de telle sorte que la capacité de la tige filetée ou vis 110 soit atteinte avant celle de l'interface adhésive. Ainsi, l'interface ou vis 110 possède une résistance mécanique à la rupture inférieure à une résistance mécanique à la rupture de l'adhésion dudit connecteur avec le substrat à l'aide de l'adhésif durci. Si besoin, une striction à la base de la tige filetée ou vis 110 pourra être élaborée afin de faire office de « fusible » si nécessaire. Cette résistance réduite permet d'éviter que l'interface adhésive, complexe à mettre en œuvre, soit abimée lors d'un arrachage éventuel. Il est plus simple de remplacer la tige filetée ou vis 110.

Il est également possible de prévoir des vis dans le connecteur 101. Ces vis ne sont pas utilisées lors de l'utilisation normale de l'assemblage collé. Néanmoins, lorsqu'il existe un besoin pour « décoller », l'assemblage, ces vis (traversant le connecteur en direction du substrat) peuvent être vissées et exercer une force dans la direction de ces vis prenant appui sur le substrat pour détacher le connecteur 101 du substrat 102.

Bien entendu, la présente invention ne se limite pas aux formes de réalisation décrites ci-avant à titre d'exemple ; elle s'étend à d'autres variantes.

## Revendications

1. Procédé de collage d'un connecteur (101, 201) sur un substrat (102), comprenant :
- mise en contact d'un dispositif d'installation (103a, 103b, 103c) avec le substrat (102) de telle sorte que le dispositif d'installation et le substrat délimitent un espace hermétique (104), ledit connecteur (101, 201) étant installé dans ledit espace hermétique et disposé avec un intervalle (105) par rapport au substrat ;
- diminution de pression (106a, 106b) au sein dudit espace hermétique, la diminution de pression amène une pression au sein dudit espace hermétique en dessous d'une pression de vapeur saturante de l'eau ou en dessous de 900mbar ;
- lorsque les conditions relatives à l'humidité ou à la présence d'eau liquide dans l'espace hermétique sont adéquates pour le collage de l'adhésif, déplacement du connecteur (101) vers le substrat (102) pour comprimer un adhésif (107) entre le substrat et le connecteur.

2. Procédé de collage selon la revendication 1 dans lequel un déplacement d'au moins une surface (103c) du dispositif d'installation (103a, 103b, 103c) sous l'effet d'une différence de pression participe au déplacement du connecteur (101).

3. Procédé de collage selon l'une des revendications 1 à 2 dans lequel une différence de temps entre la diminution de la pression et le déplacement du connecteur est supérieure à 20s.

4. Procédé de collage selon l'une des revendications 1 à 3 dans lequel le déplacement du connecteur est effectué si au moins une condition relative à un taux d'humidité dans le volume hermétique (104) est remplie.

5. Procédé de collage selon l'une des revendications 1 à 4 dans lequel le procédé comporte en outre un freinage du connecteur lors du déplacement vers le substrat.

6. Procédé de collage selon l'une des revendications 1 à 5 dans lequel le procédé comporte en outre une injection de l'adhésif après la diminution de pression.

7. Procédé de collage selon l'une des revendications 1 à 6 dans lequel le procédé comporte en outre :
- vidange d'un liquide contenu dans ledit espace hermétique (104) ;
- rinçage dudit espace hermétique (104) ;
- déshydratation dudit espace hermétique (104).

8. Procédé de collage selon l'une des revendications 1 à 7 dans lequel le procédé comporte en outre :
- maintien du connecteur (101) en compression sur le substrat pendant un durcissement de l'adhésif.

9. Procédé de collage selon l'une des revendications 1 à 8 dans lequel le procédé comporte en outre :
- conservation dudit connecteur (101) à une température inférieure à 0°C, l'adhésif étant appliqué audit connecteur (101) lors de la conservation,
- réchauffement dudit adhésif avant un durcissement dudit adhésif.

## Patentansprüche

1. Klebeverfahren eines Verbinders (101, 201) auf ein Substrat (102), umfassend:
- Inkontaktbringen einer Installationsvorrichtung (103a, 103b, 103c) mit dem Substrat (102), so dass die Installationsvorrichtung und das Substrat einen hermetischen Raum (104) begrenzen, wobei der Verbinder (101, 201) in dem hermetischen Raum installiert und mit einem Abstand (105) zum Substrat angeordnet ist;
- Druckabfall (106a, 106b) innerhalb des hermetischen Raums, der Druckabfall bringt einen Druck innerhalb des hermetischen Raums unter einen Wassersättigungsdampfdruck oder unter 900 mbar;
- wenn die Bedingungen in Bezug auf Feuchtigkeit oder das Vorhandensein von flüssigem Wasser im hermetischen Raum für das Verkleben des Klebstoffs geeignet sind, Verschieben des Verbinders (101) zum Substrat (102), um einen Klebstoff (107) zwischen dem Substrat und dem Verbinder zu komprimieren.

2. Klebeverfahren nach Anspruch 1, wobei eine Verschiebung mindestens einer Fläche (103c) der Installationsvorrichtung (103a, 103b, 103c) unter Einwirkung einer Druckdifferenz an der Verschiebung des Verbinders (101) teilnimmt.

3. Klebeverfahren nach einem der Ansprüche 1 bis 2, wobei eine Zeitdifferenz zwischen dem Druckabbau und der Verschiebung des Verbinders größer als 20s ist.

4. Klebeverfahren nach einem der Ansprüche 1 bis 3, wobei die Verschiebung des Verbinders durchgeführt wird, wenn mindestens eine Bedingung bezüglich eines Feuchtigkeitsgehalts im hermetischen Volumen (104) erfüllt ist.

5. Klebeverfahren nach einem der Ansprüche 1 bis 4, wobei das Verfahren ferner eine Abbremsung des Verbinders bei der Bewegung zum Substrat umfasst.

6. Klebeverfahren nach einem der Ansprüche 1 bis 5, wobei das Verfahren ferner eine Injektion des Klebstoffs nach dem Druckabbau umfasst.

7. Klebeverfahren nach einem der Ansprüche 1 bis 6, wobei das Verfahren ferner Folgendes umfasst:
- Ablassen einer in dem hermetischen Raum (104) enthaltenen Flüssigkeit;
- Spülen des hermetischen Raums (104);
- Austrocknen des hermetischen Raums (104).

8. Klebeverfahren nach einem der Ansprüche 1 bis 7, wobei das Verfahren ferner Folgendes umfasst:
- Halten des Verbinders (101) unter Druck auf dem Substrat während einer Aushärtung des Klebstoffs.

9. Klebeverfahren nach einem der Ansprüche 1 bis 8, wobei das Verfahren ferner Folgendes umfasst:
- Aufbewahren des Verbinders (101) bei einer Temperatur unter 0 °C, wobei der Klebstoff während der Aufbewahrung auf den Verbinder (101) aufgetragen wird,
- Erwärmen des Klebstoffs vor dem Aushärten des Klebstoffs.

## Claims

1. A method for bonding a connector (101, 201) on a substrate (102), comprising:
- bringing an installation device (103a, 103b, 103c) into contact with the substrate (102) in such a way that the installation device and the substrate delimit a hermetic space (104), said connector (101, 201) being installed in said hermetic space and arranged with a gap (105) to the substrate;
- reducing the pressure (106a, 106b) within said hermetic space, the reduction in pressure bringing the pressure within the hermetic space below a saturation vapor pressure of water or below 900mbar;
- when the conditions relative to humidity or the presence of liquid water in the hermetic space are suitable for bonding the adhesive, moving the connector (101) toward the substrate (102) to compress an adhesive (107) between the substrate and the connector.

2. The bonding method as claimed in claim 1, in which a movement of at least one surface (103c) of the installation device (103a, 103b, 103c) under the effect of a pressure difference contributes to the moving of the connector (101).

3. The bonding method as claimed in one of claims 1 or 2, in which a time difference between the reduction in pressure and the moving of the connector is longer than 20 s.

4. The bonding method as claimed in one of claims 1 to 3, in which the moving of the connector is performed if at least one condition relating to a moisture content inside the hermetic volume (104) is met.

5. The bonding method as claimed in one of claims 1 to 4, in which the method further comprises a braking of the connector during the movement toward the substrate.

6. The bonding method as claimed in one of claims 1 to 5, in which the method further comprises injecting the adhesive after the reduction in pressure.

7. The bonding method as claimed in one of claims 1 to 6, in which the method further comprises:
- emptying a liquid contained in said hermetic space (104);
- rinsing said hermetic space (104);
- dehydrating said hermetic space (104).

8. The bonding method as claimed in one of claims 1 to 7, in which the method further comprises:
- keeping the connector (101) in compression on the substrate while the adhesive hardenes.

9. The bonding method as claimed in one of claims 1 to 8, in which the method further comprises:
- maintaining said connector (101) at a temperature below 0°C, the adhesive being applied to said connector (101) during the temperature-maintaining period,
- warming said adhesive before a hardening of said adhesive.
